# EUROPÄISCHE PATENTSCHRIFT

(11) **EP 2 840 881 B1**
(45) Veröffentlichungstag und Bekanntmachung des Hinweises auf die Patenterteilung: **07.03.2018**
(21) Anmeldenummer: 13720828.6
(22) Anmeldetag: 15.04.2013
(51) Int. Cl.: A01B 71/04, A01B 29/04, F16C 23/08

(54) **LANDWIRTSCHAFTLICHE MASCHINE**
AGRICULTURAL MACHINE
MACHINE AGRICOLE

(30) Priorität: 23.04.2012 DE 102012103542; 21.03.2013 DE 102013102871
(43) Veröffentlichungstag der Anmeldung: 04.03.2015
(73) Patentinhaber: Amazonen-Werke H. Dreyer GmbH & Co. KG, 49205 Hasbergen (DE)
(72) Erfinder: REINKE, Wilfried, 26123 Oldenburg (DE)
(86) Internationale Anmeldenummer: PCT/EP2013/057756
(87) Internationale Veröffentlichungsnummer: WO 2013/160130

(56) Entgegenhaltungen:
- WO-A2-2007/105185
- DE-A1- 2 856 166
- DE-A1- 3 631 462
- US-A1- 2011 030 979

## Beschreibung

Die Erfindung bezieht sich auf eine landwirtschaftliche Maschine mit einer auf einem Erdboden oder auf einem Erntegut abrollbaren Vorrichtung zur Bodenbearbeitung oder zur Aufnahme von Erntegut, insbesondere einer Bodenwalze zur Bodenbearbeitung oder einer Erntegutaufnahmevorrichtung, mit einem über Wälzlager drehbar an einem Tragrahmen abgestützten Tragkörper und mit auf dem Tragkörper in axialer Richtung nebeneinander angeordneten und auf dem Boden abrollbaren Werkzeugen, wobei die ein Lagergehäuse aufweisenden Wälzlager an im wesentlichen endseitig am Tragkörper vorgesehenen Tragkörperwänden befestigt und jeweils mit einem Tragarm des Tragkörpers über einen Lagerbolzen verbunden sind.

Des Weiteren bezieht sich die Erfindung auf eine Lageranordnung zur verdrehbaren Verbindung eines Tragkörpers mit einem Tragrahmen über ein Wälzlager, wobei das ein Lagergehäuse aufweisende Wälzlager an einer im wesentlichen endseitig am Tragkörper vorgesehenen Tragkörperwand befestigt und mit einem Tragarm des Tragkörpers über einen Lagerbolzen verbunden ist.

Landwirtschaftliche Maschinen, wie beispielsweise Bodenwalzen sind allgemein bekannt und haben für die verschiedenen Aufgaben der Bodenbearbeitung, der Saatbettvorbereitung, der Erntegutaufnahme, der Düngereinbringung und dgl. mehrere Werkzeuge, die an die Bearbeitungsaufgaben angepasst sind. So können die Bodenbearbeitungswerkzeuge von z.B. Bodenwalzen beispielsweise als drucklose Gummireifen ausgebildet sein oder aber auch als scheibenförmige metallische Werkzeuge, die während der Transportfahrt der Bodenwalze auf dem Erdboden abrollen.

Der Tragkörper ist dabei üblicherweise als Hohlwalzenkörper ausgebildet, auf dem in seiner axialen Längsrichtung auf seinem Außenumfang die Werkzeuge angeordnet sind, die somit an ihrem Innenumfang auf dem Walzentragkörper abgestützt sind. Dabei kann eine Vielzahl von Werkzeugen in axialer Erstreckung des Tragkörpers nebeneinander angeordnet sein, wobei sich der Tragkörper an einem Tragrahmen über an beiden Endseiten des Tragkörpers vorgesehenen Tragarmen abstützt. Dazu sind an den jeweiligen endseitigen Tragkörperwänden, die üblicherweise als eingeschweißte Tragkörperplatten ausgebildet sind, Wälzlager vorgesehen, in aller Regel Rillenkugellager, die jeweils mit einem Lagerbolzen des Tragkörpers verbunden sind. Diese Lagerbolzen durchsetzen jeweils die endseitige Tragkörperwand und sind mit dieser verschweißt.

Aufgrund eines unvermeidlichen thermischen Verzuges bei einer Verschweißung ist eine derartige Ausbildung jedoch nicht passgenau herzustellen, was in aller Regel dazu führt, dass aufwändige mechanische zerspanende Nacharbeiten am Lagerbolzen durchzuführen sind. Trotz solcher sehr zeit- und kostenintensiver Nacharbeiten kann jedoch ein derartiger angeschweißter Lagerbolzen die Maßgenauigkeitsanforderungen für ein Rillenkugellager nicht erfüllen. Dies führt im rauen Praxisalltag einer landwirtschaftlichen Maschine zu Verschleißerscheinungen mit der Konsequenz eines nicht unerheblichen Reparaturbedarfs.

Aus der US 2011/0030979 A1 ist ein Lager bekannt, über welches ein Werkzeug drehbar mit einem Rahmen verbunden werden kann.

Es ist Aufgabe der vorliegenden Erfindung, eine landwirtschaftliche Maschine und im Allgemeinen eine Lageranordnung zur Verfügung zu stellen, bei der der Tragkörper in verschleißunanfälliger Weise mit den Tragarmen des Tragrahmens zu verbinden ist.

Diese Aufgabe wird durch eine landwirtschaftliche Maschine nach Anspruch 1 und eine Lageranordnung nach Anspruch 7 gelöst. Vorteilhafte Weiterbildungen sind in den abhängigen Ansprüchen angegeben.

Damit ist eine landwirtschaftliche Maschine und im allgemeinen eine Lageranordnung geschaffen, bei der der Lagerbolzen ohne das Erfordernis einer Schweißverbindung mit der Tragkörperwand und mithin ohne die Gefahren eines thermischen Verzuges während eines Schweißvorganges sicher drehbar in dem Wälzlager angeordnet werden kann, wobei die Verbindung zu der Tragkörperwand nicht mehr direkt erfolgt, sondern über das Wälzlager und das Lagergehäuse. Lediglich das Lagergehäuse ist mit der Tragkörperwand, also in aller Regel mit einer in den walzenförmigen Tragkörper eingeschweißten Tragkörperplatte, verbunden. Dies erfolgt über das z.B. mit der Tragkörperwand verschraubbare Lagergehäuse. Damit sind aufwändige zerspanende Nacharbeiten an dem Lagerbolzen aufgrund eines thermischen unvermeidbaren Verzuges während einer Verschweißung des Lagerbolzens mit der Tragkörperwand in sehr vorteilhafter Weise vermieden.

Der Lagerbolzen ist so ausgebildet, dass dieser Befestigungsaufnahmen für Befestigungsmittel des Tragarmes an den Tragkörper aufweist. Dies können in aller Regel Schrauben sein, die in entsprechende Gewindeaufnahmen innerhalb des Lagerbolzens einschraubbar sind.

Der Lagerbolzen seinerseits ist bereichsweise als Kugelabschnitt ausgebildet, der in einen entsprechend komplementär ausgebildeten Innenring des Wälzlagers, also in aller Regel in den Lagerinnenring eines Rillenkugellagers eingreifen kann. Der Innenring kann entsprechend komplementär zu der Kugelform des Kugelabschnittes des Lagerbolzens ausgebildet sein, so dass der Lagerbolzen entsprechend der Kugelform während der Montage ausgerichtet werden kann, um etwaige Montagemaßungenauigkeiten auszugleichen.

Damit ist in vorteilhafter Weise eine Lagejustierung des Tragkörpers gegenüber dem Tragarm des Tragrahmens der landwirtschaftlichen Maschine, beispielsweise einer Bodenwalze, ermöglicht. Dies alles ist mit sehr einfachen baulichen Mitteln darzustellen, womit ein erheblicher Vorteil hinsichtlich der Gestehungskosten einhergeht, aber auch hinsichtlich einer Zeitersparnis während der Herstellung und der Montage der landwirtschaftlichen Bodenwalze. Die Verbindung des Tragarmes und des Lagerbolzens zu der Tragkörperwand und somit zu dem Tragkörper mit seinen Werkzeugen erfolgt lediglich über das Wälzlager und über das Lagergehäuse.

In dem Lagerinnenring des Wälzlagers, also in aller Regel des Rillenkugellagers, kann eine umlaufende Nut eingearbeitet sein, die eine Laufbahn für die Kugeln des Rillenkugellagers des Wälzlagers bildet. In diesen Innenring kann auch noch ein Gewinde eingearbeitet sein, um dort das Sicherungselement einzuschrauben, das an dem Lagerbolzen anliegt, insbesondere an einem Bereich des kugelförmigen Abschnittes, wozu dieses Sicherungselement ebenfalls eine komplementär zu dem Abschnitt der Kugelfläche ausgebildete innere Gestaltung aufweist und mithin den Lagerbolzen in dem Lagerinnenring des Wälzlagers sichert.

Um zu verhindern, dass durch die Flanschstelle zwischen dem Lagergehäuse und der Tragkörperwand Wasser und/oder andere unerwünschte Fremdstoffe in die Lagerung eindringt, ist vorgesehen, dass zwischen dem Lagergehäuse und der Tragkörperwand zumindest ein Dichtelement angeordnet ist.

Um zu verhindern, dass durch den Bereich zwischen dem Lagergehäuse und dem Lagerbolzen Wasser und/oder andere unerwünschte Fremdstoffe in die Lagerung eindringt, ist vorgesehen, dass zwischen dem Lagergehäuse und dem Lagerbolzen zumindest ein die Lagerung des Lagerbolzens abdichtendes Dichtelement zwischen der Aufnahme für den Lagerbolzen und Tragarm angeordnet ist.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: in einer perspektivischen Darstellung ein Ausführungsbeispiel einer als landwirtschaftliche Bodenwalze ausgebildeten Maschine nach der Erfindung;
- Fig. 2: ausschnittsweise den rechten Seitenbereich des Ausführungsbeispiels der Bodenwalze nach Fig. 1 in einer perspektivischen Darstellung;
- Fig. 3: eine Schnittdarstellung (ausschnittsweise) gemäß der Schnittlinie III-III in Fig. 2;
- Fig. 4: ausschnittsweise eine zu Fig. 2 analoge Darstellung in einer anderen Perspektivdarstellung;
- Fig. 5: die Darstellung nach Fig. 4 in einer Vorderansicht;
- Fig. 6: eine perspektivische Darstellung der Tragkörperwand mit angeschraubtem Lagergehäuse und Lagerbolzen (ohne Tragarm);
- Fig. 7: eine Vorderansicht auf das Ausführungsbeispiel nach Fig. 6;
- Fig. 8: eine zu Fig. 6 analoge Darstellung in einer Explosionsdarstellung der Teile,
- Fig. 9: eine Querschnittsdarstellung der Tragkörperwand mit montiertem Lagergehäuse und montiertem Lagerbolzen (ohne Darstellung des Tragarms des Tragkörpers),
- Fig. 10: ausschnittsweise den rechten Seitenbereich eines weiteren Ausführungsbeispiels der Bodenwalze nach Fig. 1 in einer perspektivischen Darstellung;
- Fig. 11: eine Schnittdarstellung (ausschnittsweise) gemäß der Schnittlinie XI-XI in Fig. 10; und
- Fig. 12: die Darstellung der Lagerung gemäß Fig. 11 in vergrößertem Maßstab.

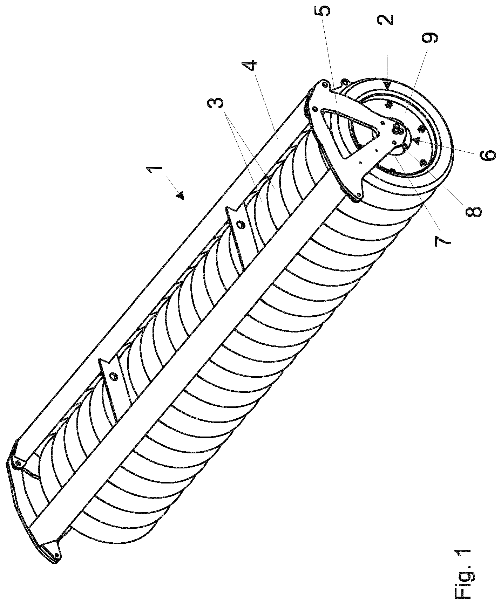

In der Zeichnung sind gleichwirkende Teile mit übereinstimmenden Bezugsziffern versehen. In Fig. 1 ist allgemein mit 1 die landwirtschaftliche Bodenwalze ausgebildete Maschine beziffert, die einen walzenförmigen Tragkörper 2 aufweist, in dessen axialer Erstreckung nebeneinander angeordnete Bodenbearbeitungswerkzeuge 3 angeordnet sind, z.B. in Gestalt von drucklosen Luftreifen, die während der Bodenbearbeitung auf dem Erdboden abrollen. Der Tragkörper 2 ist an einem Tragrahmen 4 über Tragarme 5 drehbar gehaltert. Dazu ist ein allgemein mit 6 beziffertes Wälzlager vorgesehen mit einem Lagergehäuse 7, das über Schrauben 8 an der endseitigen Tragkörperwand 9 angeschraubt ist. Die Tragkörperwand 9 ist als scheibenförmige Tragkörperplatte ausgebildet und in den walzenförmigen Tragkörper eingeschweißt.

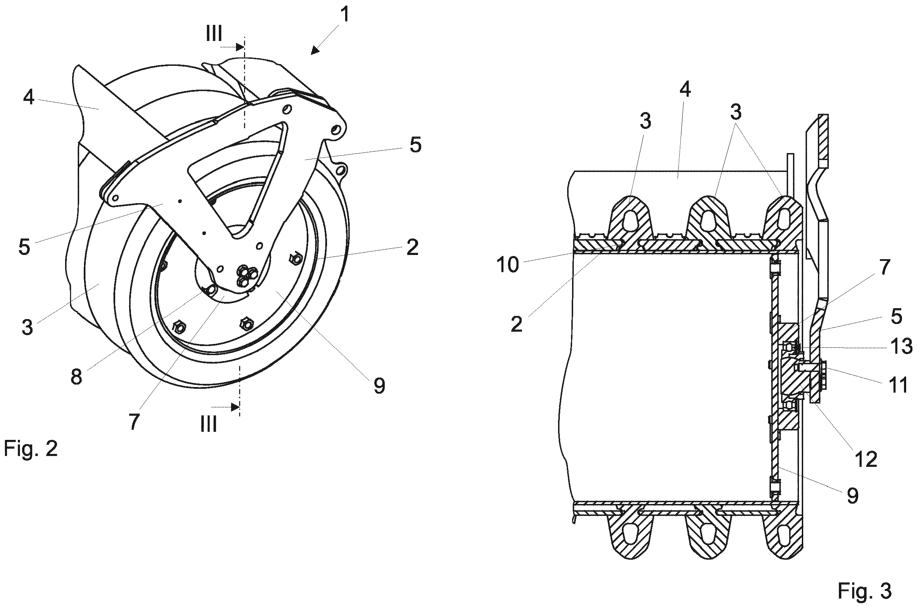

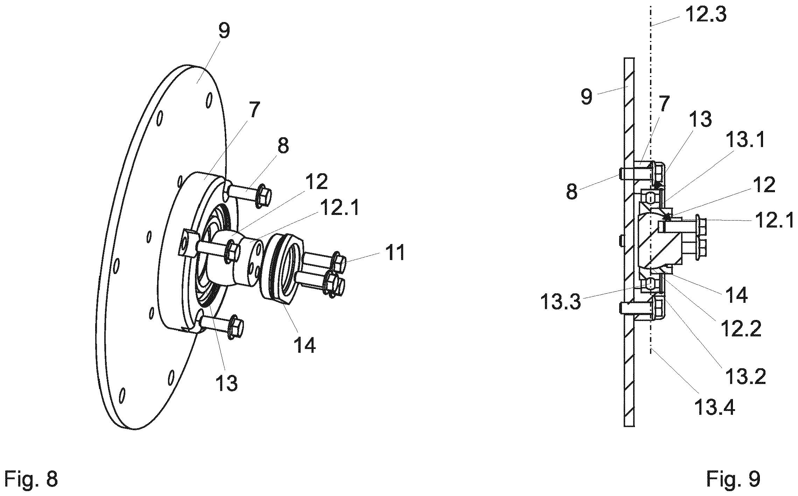

Wie näher aus den ausschnittsweisen vergrößerten Darstellungen nach den Fig. 2 und 3 (Schnittdarstellung gemäß der Schnittlinie III-III in Fig. 2) hervorgeht, sind die Bodenbearbeitungswerkzeuge 3 als drucklose Gummireifenelemente ausgebildet und in entsprechende Halterungen 10 an dem walzenförmigen Tragkörper 2 eingelassen. Der Tragarm 5 ist über Schrauben 11 mit dem Lagerbolzen 12 verbunden. Dieser Lagerbolzen 12 ist in dem allgemein mit 13 bezifferten Wälzlager angeordnet und dort gehaltert und somit ohne eine direkte Verbindung mit der Tragkörperwand 9 vorgesehen. Somit ist der Lagerbolzen 12 über das Wälzlager 13 und das Lagergehäuse 7 mit der Tragkörperwand 9 verbunden, wie im Einzelnen noch im Zusammenhang mit weiteren Zeichnungen, insbesondere der Fig. 9, erläutert werden wird.

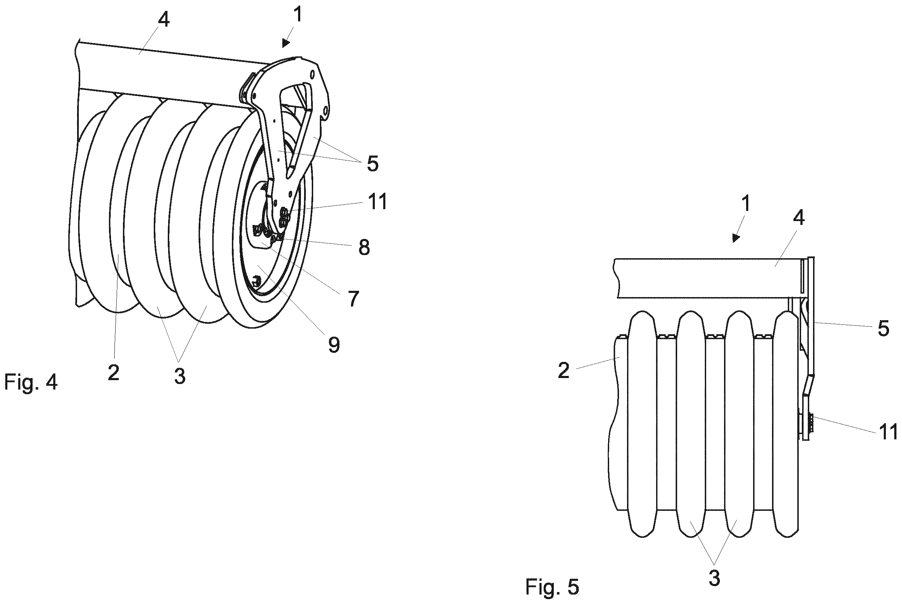

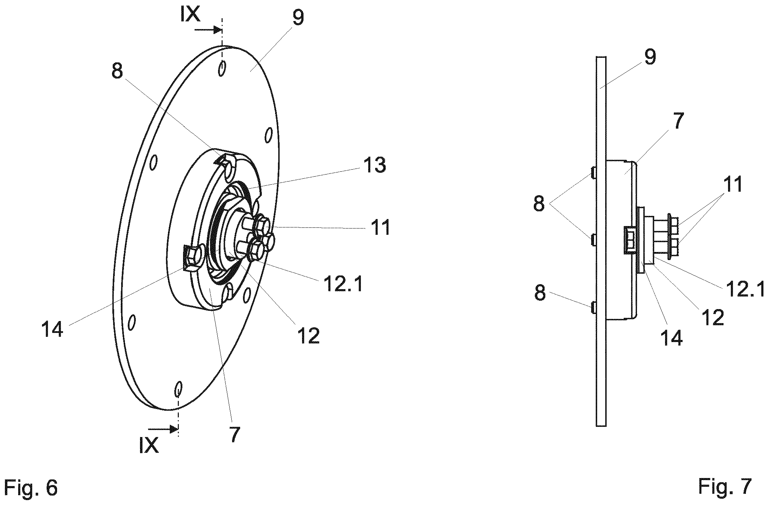

Die Fig. 4 und 5 verdeutlichen nochmals das Ausführungsbeispiel, wie es in den vorhergehenden Figuren dargestellt ist. Fig. 6 zeigt noch einmal in der perspektivischen Einzeldarstellung die in den walzenförmigen Tragkörper einzuschweißende scheibenförmige und plattenförmige Tragkörperwand 9, an der über die Schrauben 8 das Lagergehäuse angeschraubt ist. Dieses Lagergehäuse ist Teil des Rillenkugellagers 13, in das der Lagerbolzen 12 eingreift, wie dies noch näher anhand Fig. 9 erläutert werden wird. Zwischen dem zylinderförmigen Kopf 12.1 des Lagerbolzens 12 und den Köpfen der Befestigungsschrauben 11 ist der Tragarm 5 mit seinem Tragarmkopf (siehe Fig. 4) gelegen. Über das in das Rillenkugellager 13 einschraubbare Sicherungselement 14 ist der Lagerbolzen 12 in dem Rillenkugellager 13 gesichert. Fig. 7 verdeutlicht an der Seitenansicht nochmals die in Fig. 6 gezeigten Darstellung. Ebenfalls verdeutlicht dies noch einmal die Explosionsdarstellung nach Fig. 8.

Aus Fig. 9 ist ersichtlich, dass der Lagerbolzen 12 einen kugelförmigen Abschnitt 12.2 aufweist, der in dem inneren Lagerring 13.1 angeordnet ist. Dieser innere Lagerring 13.1 hat eine dem Lagerbolzen 12 und insbesondere dem kugelförmigen Abschnitt 12.2 des Lagerbolzens 12 zugewandte komplementäre Gestaltung in seinem in Fig. 9 linken Abschnitt, woran sich eine umlaufende geradlinige Ausnehmung anschließt mit einem Gewinde, in die das Sicherungselement 14 einschraubbar ist. Dieses Sicherungselement 14 hat ebenfalls eine dem kugelförmigen Abschnitt 12.2 des Lagerbolzens 12 hin zugewandte kugelförmig komplementär ausgebildete Gestaltung, so dass der Lagerbolzen 12 in dem inneren Lagerring 13.1 zu sichern ist, gleichwohl aufgrund der kugelförmigen Gestaltung ausgerichtet werden kann. Das Rillenkugellager als Wälzlager 13 hat auch einen äußeren Lagerring 13.2 und Kugeln 13.3, so dass der Lagerbolzen 12 in dem Lager 13 gegenüber dem Tragkörper und seiner Tragkörperwand 9 drehbar gelagert ist, ohne einen direkten Kontakt zu der Tragkörperwand 9 zu haben, sondern lediglich über das Wälzlager 13 und über das Lagergehäuse 7 mit seinen Schrauben 8 mit dem Tragkörper 2 verbunden ist.

Dieser kugelförmige Bereich 12.1 hat eine Mittelachse 12.3, die zu der Mittelachse 12.4 der Kugeln 13.3 (Wälzelemente) des Wälzlagers 13 koaxial angeordnet ist. Damit lassen sich die vorherrschenden Kräfte in optimaler Weise ausgleichen. Eine irgendwie geartete Schweißverbindung zwischen dem Lagerbolzen 12 und der Tragkörperwand 9 ist daher entbehrlich, so dass Verzugserscheinungen mit dem Erfordernis einer nachfolgenden Feinbearbeitung am Lagerbolzen bei der Bodenwalze nach der Erfindung nicht auffallen. Zudem sind aufgrund der kugelförmigen Ausbildung des Lagerbolzens Justierarbeiten während der Montage ermöglicht.

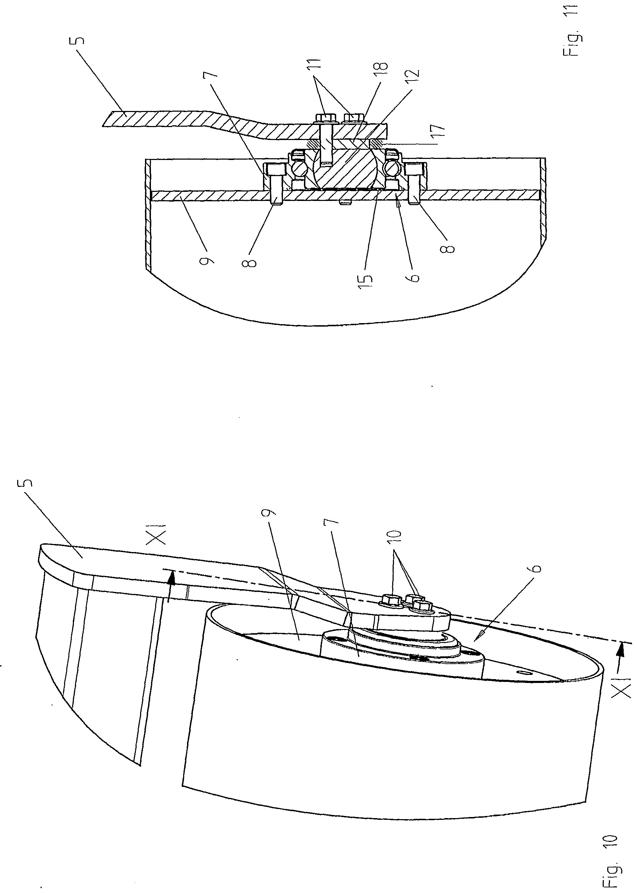

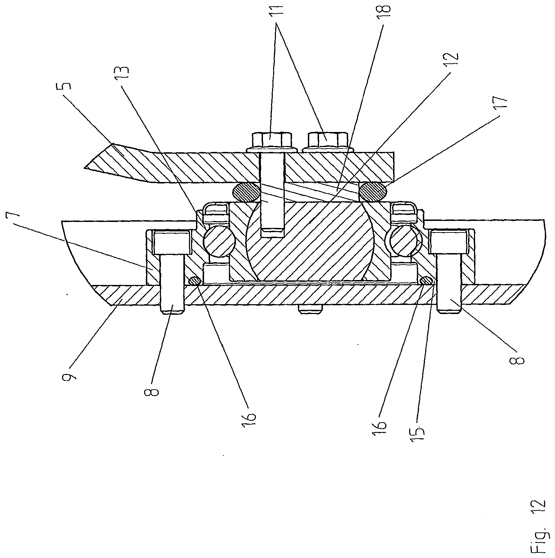

In den Fig. 10 bis 12 bis eine abgewandelte Ausgestaltung des vorbeschriebenen Wälzlagers 6 beschrieben. Dieses Wälzlager 6 weist ebenfalls ein Lagergehäuse 7 auf, das über Schrauben 8 an der endseitigen Tragkörperwand 9 angeschraubt ist. Der Tragarm 5 ist über Schrauben 11 mit dem Lagerbolzen 12 verbunden. Dieser Lagerbolzen 12 ist in dem allgemein mit 13 bezifferten Wälzlager angeordnet und dort gehaltert und somit ohne eine direkte Verbindung mit der Tragkörperwand 9 vorgesehen. Somit ist der Lagerbolzen 12 über das Wälzlager 13 und das Lagergehäuse 7 mit der Tragkörperwand 9 verbunden, wie im Einzelnen zu den vorgehenden Ausführungsbeispielen beschrieben ist.

Um zu verhindern, dass durch die Flanschstelle 15 zwischen dem Lagergehäuse 7 und der Tragkörperwand 9 Wasser und/oder andere unerwünschte Fremdstoffe in die Lagerung eindringt, ist zwischen dem Lagergehäuse 7 und der Tragkörperwand 9 zumindest ein Dichtelement 16 in Form eines Dichtringes angeordnet.

Um ebenfalls zu verhindern, dass durch den Bereich zwischen dem Lagergehäuse 7 und dem Lagerbolzen 12 Wasser und/oder andere unerwünschte Fremdstoffe in die Lagerung eindringt, ist zwischen dem Lagergehäuse 7 und dem Lagerbolzen 12 zumindest ein die Lagerung des Lagerbolzens 12 abdichtendes Dichtelement 17 in Form eines Dichtringes zwischen der Aufnahme für den Lagerbolzen 12 und Tragarm 5 angeordnet. Zwischen dem einen kugelförmigen Abschnitt aufweisenden Lagerbolzen 7 und dem Tragarm 5 ist eine Abstandsscheibe 18 angeordnet.

## Patentansprüche

1. Landwirtschaftliche Maschine (1) mit einer auf einem Erdboden oder auf einem Erntegut abrollbaren Vorrichtung zur Bodenbearbeitung oder zur Aufnahme von Erntegut, insbesondere einer Bodenwalze zur Bodenbearbeitung oder einer Erntegutaufnahmevorrichtung, mit einem über Wälzlager (13) drehbar an einem Tragrahmen (4) abgestützten Tragkörper (2) und mit auf dem Tragkörper (2) in axialer Richtung nebeneinander angeordneten und auf dem Boden abrollbaren Werkzeugen (3), wobei die ein Lagergehäuse (7) aufweisenden Wälzlager (13) an im wesentlichen endseitig am Tragkörper (2) vorgesehenen Tragkörperwänden (9) befestigt und jeweils mit einem Tragarm (5) des Tragkörpers (2) über einen Lagerbolzen (12) verbunden sind, wobei das Wälzlager (13) über das Lagergehäuse (7) lösbar an einer Tragkörperwand (9) sowie der Lagerbolzen (12) lösbar an dem zugeordneten Tragarm (5) befestigt sind, der Lagerbolzen (12) mit der Tragkörperwand (9) über das Wälzlager (13) und das Lagergehäuse (7) verbunden ist; das Wälzlager (13) einen Lagerinnenring (13.1) aufweist, in den der Lagerbolzen (12) einführbar ist und dass der Lagerinnenring (13.1) des Wälzlagers (13) über ein in den Lagerinnenring (13.1) des Wälzlagers (13) einführbares Sicherungselement (14) an dem Lagerbolzen (12) arretierbar ist; der Lagerbolzen (12) zumindest bereichsweise kugelabschnittförmig ausgebildet ist, dass der kugelabschnittförmige Bereich (12.2) des Lagerbolzens (12) eine der Tragkörperwand (9) hin zugewandte ebene Stirnfläche und einen zylinderförmigen der Trägerkörperwand (9) abgewandten Lagerbolzenkopf (12.1) aufweist, in dem Aufnahmen für Befestigungsmittel (11) des Tragrahmens (2) vorgesehen sind; und das Sicherungselement (14) an seinem dem Lagerbolzen (12) zugewandten Bereich komplementär zu der kugelförmigen Gestalt des Kugelabschnittes (12.2) des Lagerbolzens (12) ausgebildet ist.

2. Landwirtschaftliche Maschine nach Anspruch 1, **dadurch gekennzeichnet, dass** das Sicherungselement (14) in den Lagerinnenring (13.1) des Wälzlagers (13) einschraubbar ist.

3. Landwirtschaftliche Maschine nach einem der Ansprüche 1 bis 2, **dadurch gekennzeichnet, dass** der Tragarm (5) mit dem Lagerbolzen (12) verschraubbar ist, dass das Lagergehäuse (7) mit der Tragkörperwand (9) verschraubbar ist.

4. Landwirtschaftliche Maschine nach einem der Ansprüche 1 bis 3, **dadurch gekennzeichnet, dass** der Lagerinnenring (13.1) eine dem Lagerbolzen (12) zugewandte Verbindungsfläche aufweist, die komplementär zu der Kugelform des Kugelabschnittes (12.2) des Lagerbolzens (12) ausgebildet ist.

5. Landwirtschaftliche Maschine nach einem der Ansprüche 1 bis 4, **dadurch gekennzeichnet, dass** der kugelabschnittförmige Bereich (12.2) eine Mittelachse (12.3) hat, die zu der Mittelachse (12.4) der Wälzelemente (13.3) des Wälzlagers (13) koaxial angeordnet ist.

6. Landwirtschaftliche Maschine nach zumindest einem der vorstehenden Ansprüche, **dadurch gekennzeichnet, dass** zwischen dem Lagergehäuse (7) und der Tragkörperwand (9) zumindest ein Dichtelement angeordnet ist, und/oder dass zwischen dem Lagergehäuse (7) und dem Lagerbolzen (12) zumindest ein das Lagergehäuse (7) und den Lagerbolzen zueinander abdichtendes Dichtelement angeordnet ist.

7. Lageranordnung zur verdrehbaren Verbindung eines Tragkörpers (2) mit einem Tragrahmen (4) über ein Wälzlager (13), wobei das ein Lagergehäuse (7) aufweisende Wälzlager (13) an einer im wesentlichen endseitig am Tragkörper (2) vorgesehenen Tragkörperwand (9) befestigt und mit einem Tragarm (5) des Tragkörpers (2) über einen Lagerbolzen (12) verbunden ist, das Wälzlager (13) über das Lagergehäuse (7) lösbar an der Tragkörperwand (9) sowie der Lagerbolzen (12) lösbar an dem Tragarm (5) befestigt ist, und der Lagerbolzen (12) mit der Tragkörperwand (9) über das Wälzlager (13) und das Lagergehäuse (7) verbunden ist, **dadurch gekennzeichnet, dass** das Wälzlager (13) einen Lagerinnenring (13.1) aufweist, in den der Lagerbolzen (12) einführbar ist,
dass der Lagerinnenring (13.1) des Wälzlagers (13) über ein in den Lagerinnenring (13.1) des Wälzlagers (13) einführbares Sicherungselement (14) an dem Lagerbolzen (12) arretierbar ist,
dass der Lagerbolzen (12) zumindest bereichsweise kugelabschnittförmig ausgebildet ist, dass der kugelabschnittförmige Bereich (12.2) des Lagerbolzens (12) eine der Tragkörperwand (9) hin zugewandte ebene Stirnfläche und einen zylinderförmigen der Trägerkörperwand (9) abgewandten Lagerbolzenkopf (12.1) aufweist, in dem Aufnahmen für Befestigungsmittel (11) des Tragrahmens (2) vorgesehen sind, und dass das Sicherungselement (14) an seinem dem Lagerbolzen (12) zugewandten Bereich komplementär zu der kugelförmigen Gestalt des Kugelabschnittes (12.2) des Lagerbolzens (12) ausgebildet ist.

8. Lageranordnung nach Anspruch 7, **dadurch gekennzeichnet, dass** das Sicherungselement (14) in den Lagerinnenring (13.1) des Wälzlagers (13) einschraubbar ist.

9. Lageranordnung nach einem der Ansprüche 7 bis 8, **dadurch gekennzeichnet, dass** der Tragarm (5) mit dem Lagerbolzen (12) verschraubbar ist, und/oder dass das Lagergehäuse (7) mit der Tragkörperwand (9) verschraubbar ist.

10. Lageranordnung nach einem der Ansprüche 7 bis 9, **dadurch gekennzeichnet, dass** der Lagerinnenring (13.1) eine dem Lagerbolzen (12) zugewandte Verbindungsfläche aufweist, die komplementär zu der Kugelform des Kugelabschnittes (12.2) des Lagerbolzens (12) ausgebildet ist.

11. Lageranordnung nach einem der Ansprüche 7 bis 10, **dadurch gekennzeichnet, dass** der kugelabschnittförmige Bereich (12.1) eine Mittelachse (12.3) hat, die zu der Mittelachse (12.4) der Wälzelemente (13.3) des Wälzlagers (13) koaxial angeordnet ist.

12. Lageranordnung nach zumindest einem der Ansprüche 10 bis 16, **dadurch gekennzeichnet, dass** zwischen dem Lagergehäuse (7) und der Tragkörperwand (9) zumindest ein Dichtelement (16) angeordnet ist, und/oder dass zwischen dem Lagergehäuse (7) und dem Lagerbolzen (12) zumindest ein das Lagergehäuse (7) und den Lagerbolzen (12) zueinander abdichtendes Dichtelement angeordnet ist, und/oder dass zwischen dem Lagergehäuse (7) und dem Lagerbolzen (12) zumindest ein die Lagerung des Lagerbolzens (12) abdichtendes Dichtelement (17) zwischen der Aufnahme für den Lagerbolzen (12) und Tragarm (5) angeordnet ist.

## Claims

1. Agricultural machine (1) with a device, which is rollable over soil or over a crop, for soil cultivation or for picking up crop, in particular a soil roller for soil cultivation or a crop picking-up device, with a supporting body (2) which is supported rotatably on a supporting frame (4) via rolling bearings (13), and with tools (3) which are arranged next to one another in the axial direction on the supporting body (2) and are rollable over the soil, wherein the rolling bearings (13) having a bearing housing (7) are fastened to supporting body walls (9) provided substantially on the end sides of the supporting body (2), and are each connected to a supporting arm (5) of the supporting body (2) via a bearing bolt (12), wherein the rolling bearing (13) is fastened releasably to a supporting body wall (9) via the bearing housing (7), and the bearing pin (12) is fastened releasably to the associated supporting arm (5), the bearing bolt (12) is connected to the supporting body wall (9) via the rolling bearing (13) and the bearing housing (7), the rolling bearing (13) has a bearing inner ring (13.1) into which the bearing bolt (12) is introducible, and in that the bearing inner ring (13.1) of the rolling bearing (13) is lockable to the bearing bolt (12) via a securing element (14) which is introducible into the bearing inner ring (13.1) of the rolling bearing (13); the bearing bolt (12) is of spherical-segment-shaped design at least in regions, in that the spherical-segment-shaped region (12.2) of the bearing bolt (12) has a flat end surface facing the supporting body wall (9) and a cylindrical bearing bolt head (12.1) which faces away from the supporting body wall (9) and in which receptacles for fastening means (11) of the supporting frame (2) are provided; and the securing element (14), at its region facing the bearing bolt (12), is formed in a complementary manner to the spherical design of the spherical segment (12.2) of the bearing bolt (12).

2. Agricultural machine according to Claim 1, **characterized in that** the securing element (14) is screwable into the bearing inner ring (13.1) of the rolling bearing (13).

3. Agricultural machine according to either of Claims 1 and 2, **characterized in that** the supporting arm (5) is screwable to the bearing bolt (12), **in that** the bearing housing (7) is screwable to the supporting body wall (9).

4. Agricultural machine according to one of Claims 1 to 3, **characterized in that** the bearing inner ring (13.1) has a connecting surface which faces the bearing bolt (12) and is formed in a complementary manner to the spherical shape of the spherical segment (12.2) of the bearing bolt (12).

5. Agricultural machine according to one of Claims 1 to 4, **characterized in that** the spherical-segment-shaped region (12.2) has a centre axis (12.3) which is arranged coaxially with respect to the centre axis (12.4) of the rolling elements (13.3) of the rolling body (13).

6. Agricultural machine according to at least one of the preceding claims, **characterized in that** at least one sealing element is arranged between the bearing housing (7) and the supporting body wall (9), and/or **in that** at least one sealing element sealing off the bearing housing (7) and the bearing bolt with respect to each other is arranged between the bearing housing (7) and the bearing bolt (12).

7. Bearing arrangement for the rotatable connection of a supporting body (2) to a supporting frame (4) via a rolling bearing (13), wherein the rolling bearing (13) having a bearing housing (7) is fastened to a supporting body wall (9) provided substantially on the end side of the supporting body (2), and is connected to a supporting arm (5) of the supporting body (2) via a bearing bolt (12), the rolling bearing (13) is fastened releasable to the supporting body wall (9) via the bearing housing (7) and the bearing bolt (12) is fastened releasably to the supporting arm (5), and the bearing bolt (12) is connected to the supporting body wall (9) via the rolling bearing (13) and the bearing housing (7), **characterized in that** the rolling bearing (13) has a bearing inner ring (13.1) into which the bearing bolt (12) is introducible, and **in that** the bearing inner ring (13.1) of the rolling bearing (13) is lockable to the bearing bolt (12) via a securing element (14) which is introducible into the bearing inner ring (13.1) of the rolling bearing (13); **in that** the bearing bolt (12) is of spherical-segment-shaped design at least in regions, **in that** the spherical-segment-shaped region (12.2) of the bearing bolt (12) has a flat end surface facing the supporting body wall (9) and a cylindrical bearing bolt head (12.1) which faces away from the supporting body wall (9) and in which receptacles for fastening means (11) of the supporting frame (2) are provided; and **in that** the securing element (14), at its region facing the bearing bolt (12), is formed in a complementary manner to the spherical design of the spherical segment (12.2) of the bearing bolt (12).

8. Bearing arrangement according to Claim 7, **characterized in that** the securing element (14) is screwable into the bearing inner ring (13.1) of the rolling bearing (13).

9. Bearing arrangement according to either of Claims 7 and 8, **characterized in that** the supporting arm (5) is screwable to the bearing bolt (12), and/or in that the bearing housing (7) is screwable to the supporting body wall (9).

10. Bearing arrangement according to one of Claims 7 to 9, **characterized in that** the bearing inner ring (13.1) has a connecting surface which faces the bearing bolt (12) and is formed in a complementary manner to the spherical shape of the spherical segment (12.2) of the bearing bolt (12).

11. Bearing arrangement according to one of Claims 7 to 10, **characterized in that** the spherical-segment-shaped region (12.1) has a centre axis (12.3) which is arranged coaxially with respect to the centre axis (12.4) of the rolling elements (13.3) of the rolling body (13).

12. Bearing arrangement according to at least one of Claims 10 to 16, **characterized in that** at least one sealing element (16) is arranged between the bearing housing (7) and the supporting body wall (9), and/or that at least one sealing element sealing off the bearing housing (7) and the bearing bolt with respect to each other is arranged between the bearing housing (7) and the bearing bolt (12), and/or **in that**, between the bearing housing (7) and the bearing bolt (12), at least one sealing element (17) sealing off the mounting of the bearing bolt (12) is arranged between the receptacle for the bearing bolt (12) and the supporting arm (5).

## Revendications

1. Machine agricole (1) avec un dispositif pouvant rouler sur un sol ou sur un produit de récolte pour le traitement du sol ou pour le ramassage de produit de récolte, en particulier un rouleau de sol pour le traitement du sol ou un dispositif de ramassage de produit de récolte, avec un corps de support (2) monté à rotation sur un châssis porteur (4) au moyen de paliers à roulement (13) et avec des outils (3) disposés l'un à côté de l'autre en direction axiale sur le corps de support (2) et pouvant rouler sur le sol, dans laquelle les paliers à roulement (13) présentant un logement de palier (7) sont fixés à des parois de corps de support (9) prévues essentiellement en extrémité sur le corps de support (2) et sont assemblés respectivement à un bras porteur (5) du corps de support (2) au moyen d'un axe de palier (12),
dans laquelle
le palier à roulement (13) est fixé de façon séparable à la paroi de corps de support (9) au moyen du logement de palier (7) et l'axe de palier (12) est fixé de façon séparable au bras porteur associé (5), l'axe de palier (12) est assemblé à la paroi de corps de support (9) par le palier à roulement (13) et le logement de palier (7);
le palier à roulement (13) présente une bague intérieure de palier (13.1), dans laquelle l'axe de palier (12) peut être introduit et la bague intérieure de palier (13.1) du palier à roulement (13) peut être calée sur l'axe de palier (12) au moyen d'un élément de fixation (14) pouvant être introduit dans la bague intérieure de palier (13.1) du palier à roulement (13); l'axe de palier (12) est réalisé au moins localement en forme de partie de sphère, la région en forme de partie de sphère (12.2) de l'axe de palier (12) présente une face frontale plane tournée vers la paroi de corps de support (9) et une tête d'axe de palier cylindrique (12.1) détournée de la paroi de corps de support (9), dans laquelle il est prévu des logements pour des moyens de fixation (11) du châssis porteur (2); et l'élément de fixation (14) est réalisé dans sa région tournée vers l'axe de palier (12) avec une forme complémentaire à la forme sphérique de la partie de sphère (12.2) de l'axe de palier (12).

2. Machine agricole selon la revendication 1, **caractérisée en ce que** l'élément de fixation (14) peut être vissé dans la bague intérieure de palier (13.1) du palier à roulement (13).

3. Machine agricole selon l'une quelconque des revendications 1 à 2, **caractérisée en ce que** le bras porteur (5) peut être vissé à l'axe de palier (12) et **en ce que** le logement de palier (7) peut être vissé à la paroi de corps de support (9).

4. Machine agricole selon l'une quelconque des revendications 1 à 3, **caractérisée en ce que** la bague intérieure de palier (13.1) présente une face d'assemblage tournée vers l'axe de palier (12), qui présente une forme complémentaire à la forme sphérique de la partie de sphère (12.2) de l'axe de palier (12).

5. Machine agricole selon l'une quelconque des revendications 1 à 4, **caractérisée en ce que** la région en forme de partie de sphère (12.2) possède un axe central (12.3), qui est disposé de façon coaxiale à l'axe central (12.4) des éléments de roulement (13.3) du palier à roulement (13).

6. Machine agricole selon au moins une des revendications précédentes, **caractérisée en ce qu'**au moins un élément d'étanchéité est disposé entre le logement de palier (7) et la paroi de corps de support (9), et/ou **en ce qu'**au moins un élément d'étanchéité assurant l'étanchéité du logement de palier (7) par rapport à l'axe de palier est disposé entre le logement de palier (7) et l'axe de palier (12).

7. Ensemble de palier pour l'assemblage rotatif d'un corps de support (2) avec un châssis porteur (4) au moyen d'un palier à roulement (13), dans lequel le palier à roulement (13) présentant un logement de palier (7) est fixé à une paroi de corps de support (9) prévue essentiellement en extrémité sur le corps de support (2) et est assemblé à un bras porteur (5) du corps de support (2) au moyen d'un axe de palier (12), le palier à roulement (13) est fixé de façon séparable à la paroi de corps de support (9) au moyen du logement de palier (7) et l'axe de palier (12) est fixé de façon séparable au bras porteur (5), et l'axe de palier (12) est assemblé à la paroi de corps de support (9) au moyen du palier à roulement (13) et du logement de palier (7),
**caractérisé en ce que**
le palier à roulement (13) présente une bague intérieure de palier (13.1), dans laquelle l'axe de palier (12) peut être introduit,
la bague intérieure de palier (13.1) du palier à roulement (13) peut être calée sur l'axe de palier (12) au moyen d'un élément de fixation (14) pouvant être introduit dans la bague intérieure de palier (13.1) du palier à roulement (13),
l'axe de palier (12) est réalisé au moins localement en forme de partie de sphère,
la région en forme de partie de sphère (12.2) de l'axe de palier (12) présente une face frontale plane tournée vers la paroi de corps de support (9) et une tête d'axe de palier cylindrique (12.1) détournée de la paroi de corps de support (9), dans laquelle il est prévu des logements pour des moyens de fixation (11) du châssis porteur (2), et
l'élément de fixation (14) est réalisé dans sa région tournée vers l'axe de palier (12) avec une forme complémentaire à la partie de sphère (12.2) de l'axe de palier (12).

8. Ensemble de palier selon la revendication 7, **caractérisé en ce que** l'élément de fixation (14) peut être vissé dans la bague intérieure de palier (13.1) du palier à roulement (13).

9. Ensemble de palier selon une des revendications 7 à 8, **caractérisé en ce que** le bras porteur (5) peut être vissé à l'axe de palier (12), et/ou **en ce que** le logement de palier (7) peut être vissé à la paroi de corps de support (9).

10. Ensemble de palier selon l'une quelconque des revendications 7 à 9, **caractérisé en ce que** la bague intérieure de palier (13.1) présente une face d'assemblage tournée vers l'axe de palier (12), qui présente une forme complémentaire à la forme sphérique de la partie de sphère (12.2) de l'axe de palier (12).

11. Ensemble de palier selon l'une quelconque des revendications 7 à 10, **caractérisé en ce que** la région en forme de partie de sphère (12.1) possède un axe central (12.3), qui est disposé de façon coaxiale à l'axe central (12.4) des éléments de roulement (13.3) du palier à roulement (13).

12. Ensemble de palier selon au moins une des revendications 10 à 16, **caractérisé en ce qu'**au moins un élément d'étanchéité est disposé entre le logement de palier (7) et la paroi de corps de support (9), et/ou **en ce qu'**au moins un élément d'étanchéité assurant l'étanchéité du logement de palier (7) par rapport à l'axe de palier (12) est disposé entre le logement de palier (7) et l'axe de palier (12), et/ou en ce qu'entre le logement de palier (7) et l'axe de palier (12) au moins un élément d'étanchéité (17) assurant l'étanchéité du support de l'axe de palier (12) est disposé entre le logement pour l'axe de palier (12) et le bras porteur (5).
